# EUROPEAN PATENT SPECIFICATION

(11) **EP 2 540 773 B1**
(45) Date of publication and mention of the grant of the patent: **20.05.2020**
(21) Application number: 12169601.7
(22) Date of filing: 25.05.2012
(51) Int. Cl.: C08L 33/02, C08L 3/02, C09D 133/02, C09D 103/02

(54) **AQUEOUS CURABLE BINDER COMPOSITION**
Wässrige härtbare Bindezusammensetzung
Composition de liaison durcissable aqueuse

(30) Priority: 30.06.2011 US 201161503174 P
(43) Date of publication of application: 02.01.2013
(73) Proprietor: Rohm and Haas Company, Philadelphia, PA 19106-2399 (US)
(72) Inventor: Kelly, Michael D, North Wales, PA Pennsylvania 19454 (US); Beegle-Renna, Robiana L., Norristown, PA Pennsylvania 19401 (US)
(74) Representative: Houghton, Mark Phillip

(56) References cited:
- EP-A1- 2 199 332
- WO-A1-2011/044490
- US-A1- 2005 215 153

## Description

The present invention provides an aqueous curable binder composition useful as a thermosetting binder for a variety of applications, particularly for substrates that need to retain at least some flexibility. More particularly, the present invention relates to curable aqueous binder compositions comprising at least one water-soluble carbohydrate binder; at least one polyacid crosslinking agent; and one or more high acid polycarboxy emulsion copolymer as a latex modifier.

Due to their excellent cost/performance ratio, the thermosetting binder resins of choice in the past have been phenol/formaldehyde or urea/formaldehyde resins. In these binder resins, latex modifiers are often used to impart flexibility to the rigid binder resin for improved mechanical properties. These latexes can maintain their "neat" shelf life for up to and often in excess of 6 months, but their water dilution properties are more sensitive. When latexes are diluted, their particles move further from one another, destabilizing the surfactant and ionic protection in water. This effect is exaggerated when mixed in acidic resins because of the additional polymer and chemical interactions. These disadvantages limit the uses of latexes in thermosetting binders containing formaldehyde. Further, due to the health and environmental problems associated with formaldehyde, persons of skill in the art are focusing more on curable compositions containing little or no formaldehyde.

Existing commercial formaldehyde-free binders contain a carboxylic acid polymer and a polyol that esterify and form a thermoset when heat cured. Commercial binders have typically been designed to afford a binder that when cured is substantially rigid. For example, in fiberglass insulation binders, the cured binders must allow the insulation to be compressed, but have rigidity that allows the compressed insulation to recover substantially to its original shape once compressive forces are removed. This allows, for example, the insulation to be shipped in a rolled, compressed state and unrolled before installation to release the compression, and allow a fluffy, heat-insulating mat to be installed.

However, for other applications, the rigid binders of the type described above are undesirable. For example, in thin fiberglass or polyester mats that are to be used in roofing, the mat must be held together with a binder that allows the mat to flex substantially after the binder is cured, to allow the mat to be processed further (e.g., to convert mat into roofing material), and allow the end product containing the mat to flex well in use. For example, in roofing mats, the end roofing product may be impregnated or layered with asphaltic materials, so the resultant roofing product retains flexibility to allow it to conform to the roof (e.g., bend over peaks and into valleys) and can expand and contract with temperature fluctuations, without the mat itself fracturing because it is too brittle.

Other applications where curable, flexible formaldehyde-free binders are useful include paper, cellulosics, polyester, glass mat, and glass veil. Such substrates are used in a variety of applications, including flooring underlayments, filtration media, and building products.

U.S. Patent No. 5,895,804 discloses a starch-based thermosetting binder with soluble polycarboxy polymers. However, given that soluble polymers have relatively high acid monomer contents, these types of binders tend to be stiff and unsuitable for flexible substrates. EP2199332 discloses a curable composition comprising polymer particles of at least one polycarboxy emulsion copolymer having from 5-40% by weight of a carboxy acid monomer, in polymerized form, in the copolymer and at least one natural binder selected from the group consisting of a polysaccharide, or a vegetable protein, or lignin, or lignosulfonate, or mixtures thereof, the natural binder being present in a weight percent on total composition binder solids from 20 - 95%.

EP1892273 discloses a binder composition comprising at least one polycarboxy emulsion copolymer having from 5-40% by weight of a carboxy acid monomer in the copolymer; at least one hydroxyamide crosslinker having at least two hydroxy groups and at least one extender selected from the group consisting of a polysaccharide or a vegetable protein, or mixtures thereof, the extender being present in a weight percent on total composition binder solids from 5 - 70%.

There remains a need for an inexpensive, formaldehyde-free, thermoset binder that retains both flexibility and strength after cure. The inventors have surprisingly found a solution to this problem in an inventive composition that does not require the relatively expensive polyol crosslinker additives often used in the art. The polycarboxy emulsion polymers used in the present invention as high acid latex modifiers, at a low level, for the base binder system are stable in the low acid environment of the base binder system whereas traditional latex modifiers used for formaldehyde resins will phase separate out of the binder upon dilution.

### STATEMENT OF THE INVENTION

In accordance with the present invention, curable binder compositions comprise:
a. from 50-97% by weight of the total solids in the curable composition, of at least one water-soluble carbohydrate;
b. at least one polycarboxy emulsion copolymer, as a latex modifier, including, as copolymerized units, from 10-30% by weight based on the total weight of the emulsion copolymer solids, of a carboxy monomer bearing a carboxylic acid group, anhydride group, or salt thereof or hydroxyl group; and
c. at least one polyacid crosslinking agent which are polybasic carboxylic acids or aqueous solution addition polymers, each of which contains at least two carboxylic acid groups, anhydride groups, or salts thereof, wherein the water-soluble carbohydrates are chosen from dextrins, maltodextrins and their combination.

The aqueous curable composition of the present invention may further comprise at least one cure catalyst. Preferably, the cure catalyst is a phosphorous containing compound.

Preferably, the water-soluble carbohydrate has a dextrose equivalent value (DE) ranging from 4 to 40, is made from starch and is a water-soluble polysaccharide. More preferably, it is selected from dextrin, maltodextrin, glucose syrup having a dextrose equivalent value of from 4 to 40, and the combination thereof.

Preferably, the carboxy acid monomer of the polycarboxy emulsion copolymer is acrylic acid. More preferably, the polycarboxy emulsion copolymer comprises the copolymerization product of from 10-30% by weight of acrylic acid, based on the total weight of monomers used to make the emulsion copolymer.

The polycarboxy emulsion copolymer may comprise from 0.1 to 10 weight percent of the polymerization residue of a multi-ethylenically unsaturated monomer, based on the total weight of the monomers used to make the emulsion copolymer. Preferably, the multi-ethylenically unsaturated monomer is allyl methacrylate.

The polyacid crosslinking agent are selected from polybasic carboxylic acids, anhydrides, or the salts thereof, or can be an aqueous solution addition polymer or copolymer containing at least two carboxylic acid groups, anhydride groups, or salts thereof. Preferably, the polyacid crosslinking agent is selected from citric acid, an aqueous solution homopolymer or copolymer of acrylic acid, and combinations thereof.

The aqueous curable composition of this invention may be used in a coating composition.

In another aspect, the present invention provides methods comprising providing a wet, uncured web or mat of fibers, applying the binder of the present invention thereto and curing the binder.

As used herein, the phrase "alkyl" means any aliphatic alkyl group having one or more carbon atoms, the alkyl group including n-alkyl, s-alkyl, i-alkyl, t-alkyl groups or cyclic aliphatics containing one or more 5, 6 or seven member ring structures.

As used herein, the phrase "aqueous" means water and mixtures composed substantially of water and water-miscible solvents.

As used herein, the term "average number of saccharide groups" is equal to the DP or average degree of polymerization or saccharide groups in the carbohydrate component.

As used herein, the term "wt%" or "wt. percent" means weight percent based on solids.

As used herein, the phrase "based on the total weight of binder solids" or "weight percent of the total solids in the binder" refers to weight amounts of any given ingredient in comparison to the total weight amount of all the non-water ingredients in the binder (e.g., emulsion copolymers, natural binder, soluble polyacids, and the like). Binders of this invention can be aqueous or dry (with water optionally added prior to application to a substrate).

As used herein, the phrase "dextrose equivalent value" or DE is defined as 120/DP, where DP stands for average degree of polymerization or saccharide groups in the carbohydrate component. Thus, a carbohydrate component having a DE of 30 has an average of four saccharide groups per molecule even though the carbohydrate component contains a distribution of monosaccharides as well as oligo-saccharides of different formula weights. And, by knowing DP, where DP=120/DE, and the sugar unit weight, one can calculate number average molecular weight. For instance, a saccharide with a DE of 30 has a calculated DP of 4 and, thus, has a number average molecular weight = 4×180 = 720, for material based on glucose units having a unit weight taken to be 180 amu. For example, a carbohydrate component having a DE of 25 has an approximate average formula weight equal to 4.8 dextrose units, or 864.

As used herein, unless otherwise indicated, the phrase "formula weight" means the weight in atomic mass units (amu) of the theoretical molecular formula of a compound. The formula weight for a carbohydrate component, which is a mixture, is not always available. Thus, one may alternatively use dextrose equivalent value to calculate a number average molecular weight or use a reported molecular weight for a commercially available carbohydrate component.

As used herein, unless otherwise indicated, the word "copolymer" includes, independently, copolymers, terpolymers, block copolymers, segmented copolymers, graft copolymers, and any mixture or combination thereof. (Co)polymer means homopolymer or copolymer.

As used herein, the phrase "emulsion polymer" means polymers dispersed in an aqueous medium that has been prepared by emulsion polymerization.

As used herein, the phrase "formaldehyde-free composition" refers to compositions substantially free from added formaldehyde, and which do not liberate substantial formaldehyde as a result of drying and/or curing.

As used herein, the term "(meth)acrylate" means acrylate, methacrylate, and mixtures thereof.

Unless otherwise indicated, all temperatures and pressures are room temperature and standard pressure.

The polycarboxy emulsion polymers used in the present invention as high acid latex modifiers for the base binder system are stable in the low acid environment of the base binder system whereas traditional latex modifiers used for formaldehyde resins will phase separate out of the binder upon dilution. The polycarboxy emulsion copolymers used as high acid latex modifiers for the base binder system greatly improve the tensile strength and tear strength of the base binder system when used in fiberglass non-woven mat substrates. Other aspects of this invention are discussed below.

The curable composition includes at least one water-soluble carbohydrate that is natural in origin and derived from renewable resources, chosen from dextrins, maltodextrins and combinations thereof.

The carbohydrate may have a number average molecular weight from 1,000 to 8,000. Additionally, the carbohydrate polymer as a dextrose equivalent (DE) number from 4 to 40, preferably from 2 to 20, from 7 to 11, or from 9 to 14. The carbohydrates beneficially have a low viscosity and cure at moderate temperatures (e.g., 80-250°C) alone or with additives. The low viscosity enables the carbohydrate to be utilized in a binder composition. In exemplary embodiments, the viscosity of the carbohydrate may be lower than 500 cps at 50% concentration and between 20 and 30°C. The use of a carbohydrate in the inventive binder composition is advantageous in that carbohydrates are readily available or easily obtainable and are low in cost.

The carbohydrate is a water-soluble polysaccharide such as dextrins or maltodextrin. The carbohydrate polymer may be present in the curable composition in an amount from 50% to 97% by weight of the total solids in the curable composition, from 40% to 95% by weight of the total solids in the curable composition, from 50% to 95% by weight of the total solids in the curable composition, from 60% to 90%, or from 70% to 85%. As used herein, % by weight indicates % by weight of the total solids in the curable composition.

The polycarboxy emulsion copolymer used in the binder composition of this invention includes, as copolymerized units, from 10% to 30% by weight based on the weight of the emulsion copolymer solids, of a carboxy monomer bearing a carboxylic acid group, anhydride group, or salt thereof or hydroxyl-group, such as (meth) acrylic acid and hydroxyethyl(meth)acrylate. Suitable carboxy monomers may be ethylenically unsaturated carboxylic acid monomers such as, for example, methacrylic acid (MAA), acrylic acid (AA), crotonic acid, fumaric acid, maleic acid, 2-methyl maleic acid, itaconic acid, 2-methyl itaconic acid, a,b-methylene glutaric acid, monoalkyl maleates, and monoalkyl fumarates; ethylenically unsaturated anhydrides such as, for example, maleic anhydride, itaconic anhydride, acrylic anhydride, and methacrylic anhydride; and salts thereof. Acrylic acid is the preferred carboxy monomer.

Preferably, when acrylic acid is the carboxy acid monomer used to make the polycarboxy emulsion copolymer of the present invention, and it is used at a weight range of 5-30%, based on the total monomer weight of monomers used to make the polycarboxy emulsion copolymer.

Ethylenically unsaturated co-monomers useful to make the polycarboxy emulsion copolymer include acrylic ester monomers such as methyl acrylate (MMA), ethyl acrylate (EA), butyl acrylate (BA), 2-ethylhexyl acrylate, decyl acrylate, methyl methacrylate, butyl methacrylate, isodecyl methacrylate, hydroxyethyl acrylate, hydroxyethyl methacrylate, and hydroxypropyl methacrylate; (meth)acrylamide or substituted (meth)acrylamides; styrene or substituted styrenes; butadiene; vinyl acetate or other vinyl esters; acrylonitrile or methacrylonitrile; and the like. Styrene-acrylic latexes or all-acrylic latexes are well-suited to the performance requirements of the targeted end products.

To increase its strength in use, the polycarboxy emulsion copolymer of the present invention comprises one or more copolymerized multi-ethylenically unsaturated monomer such as, for example, allyl methacrylate (ALMA), allyl acrylate, diallyl phthalate, 1,4-butylene glycol dimethacrylate, 1,2-ethylene glycol dimethacrylate, 1,6-hexanediol diacrylate, butadiene, trimethylolpropane triacrylate (TMPTA) and divinyl benzene. Of these, ALMA, divinylbenzene (DVB), diallyl phthalate, 1,4-butylene glycol dimethacrylate, and 1,6-hexanediol diacrylate are preferred. ALMA is the most preferred. The multi-ethylenically unsaturated monomer can be effectively employed at levels as low as 0.1%, by weight based on the weight of monomers used to make the emulsion copolymerpreferably from 0.1 to 10%, or 0.1 to 5%, more preferably from 0.1 to 4%, or 0.2 to 4%, and most preferably from 0.1 to 2%, or 0.2 to 2%, or 0.25 to 2%, or 1.0 to 2%, by weight based on the total weight of the monomers used to make the emulsion copolymer

The binder compositions of the present invention further include one or more polyacid crosslinking agents which are polybasic carboxylic acids or aqueous solution addition polymers, each of which contains at least two carboxylic acid groups, anhydride groups, or salts thereof. Suitable aqueous solution polymers comprise the polymerization product of one or more ethylenically unsaturated carboxylic acids such as, for example, methacrylic acid, acrylic acid, crotonic acid, fumaric acid, maleic acid, 2-methyl maleic acid, itaconic acid, 2-methyl itaconic acid; ethylenically unsaturated anhydrides such as, for example, maleic anhydride, itaconic anhydride, acrylic anhydride, and methacrylic anhydride; and salts thereof, at a level of at least 70% by weight based on the weight of monomers used to make the emulsion copolymer and the water soluble addition (co)polymer. Additional ethylenically unsaturated monomers may include acrylic ester monomers, including methyl (meth)acrylate, ethyl (meth)acrylate, butyl (meth)acrylate, 2-ethylhexyl acrylate.

The polyacid crosslinking agents containing at least two carboxylic acid groups, anhydride groups, or salts thereof may have a weight average molecular weight from 1,000 to 150,000. The polyacid crosslinking agent may be present in the curable composition in an amount from 5% to 50% by weight of the total solids in the curable composition, preferably in an amount from 10% to 45% by weight of the total solids in the curable composition, most preferably in an amount from 15% to 40% by weight of the total solids in the curable composition.

To lower the binder viscosity, the polyacid crosslinker agent of this invention may be one or more low molecular weight polybasic carboxylic acid, anhydride or salts thereof having a molecular weight (FW) of 1000 or less, preferably 500 or less, and most preferably 200 or less. "Polybasic" means having at least two reactive acid or anhydride functional groups. Examples of suitable low molecular weight polybasic carboxylic acids and anhydrides include, for example, maleic acid, maleic anhydride, fumaric acid, succinic acid, succinic anhydride, sebacic acid, azelaic acid, adipic acid, citric acid, glutaric acid, tartaric acid, itaconic acid, trimellitic acid, hemimellitic acid, trimesic acid, tricarballytic acid, 1,2,3,4-butanetetracarboxylic acid, pyromellitic acid, oligomers of carboxylic acid.

To increase its cure rate, the binder composition may further comprise a phosphorous-containing accelerator such as those disclosed in U.S. Patent No. 6,136,916. Preferably, the accelerator is chosen from sodium hypophosphite, sodium phosphite, and a mixture thereof. The phosphorous-containing accelerator can also be an oligomer bearing phosphorous-containing groups such as, for example, an oligomer of acrylic acid formed in the presence of sodium hypophosphite by addition polymerization, but a separate compound from any soluble polymer serving as part of the binder of the curable composition of the present invention. The one or more phosphorous-containing accelerator may be used at a level of from 0 wt.% to 40 wt.%, based on the total weight of binder solids. The phosphorous-containing accelerators may be used in the amount of 0.1 wt.% or more, based on the total weight of binder solids, and up to 25 wt.%, or up to 20 wt.%, or, preferably, up to 15 wt.%, and, more preferably, up to 12 wt.%. When the phosphorous-containing accelerator comprises part of an addition (co)polymer or (co)oligomer, the wt% of the phosphorous-containing accelerator is based on/determined by wt% of hypophosphite, phosphinate or phosphonate charged to the reactor as a fraction of the total solids. Preferably sodium hypophosphite is used, and its weight percent based on total carboxyl acid weight from the emulsion polymer and the soluble polymer (if it is used) is from 1% - 20%, preferably 5% - 15%.

Chain transfer agents such as mercaptans, polymercaptans, and halogen compounds can be used in the polymerization mixture in order to moderate the molecular weight of the copolymer composition. Generally, from 0% to 10% by weight, based on the weight of the polycarboxy emulsion copolymer, of C₄- C₂₀ alkyl mercaptans, mercaptopropionic acid, or esters of mercaptopropionic acid, can be used. Preferably, the emulsion copolymer used in this invention has a Tg of from 0-35°C, preferably 10-20°C, for non-treated substrates having an inherent elongation of greater than 5%, such as spunbond polyester; and from 35-70°C for non-treated substrates having an inherent elongation of less than 5%, such as glass mat, as measured by differential scanning calorimetry per ASTM 3418/82, midpoint temperature; cell calibration using an indium reference for temperature and enthalpy.

The emulsion copolymer used in this invention has weight average molecular weight of between 5,000 and 2,000,000, preferably between 20,000 and 1,000,000. For applications requiring high performance at elevated temperatures, the emulsion copolymer most preferably has a weight average molecular weight of 100,000 to 1,000,000, however, for some room-temperature applications, the molecular weight is most preferably between 30,000 and 600,000.

The emulsion copolymer preferably comprises 5-40% of weight percent of the total solids in the binder; preferably from 9-35%; more preferably from 12-30%; most preferably from 15-20%.

The binder of this invention can contain, in addition, conventional treatment components such as, for example, emulsifiers; pigments; fillers or extenders; anti-migration aids; curing agents; coalescents; surfactants, particularly nonionic surfactants; spreading agents; mineral oil dust suppressing agents; biocides; plasticizers; organosilanes; antifoaming agents such as dimethicones, silicone oils and ethoxylated nonionics; corrosion inhibitors, particularly corrosion inhibitors effective at pH<4 such as thioureas, oxalates, and chromates; colorants; antistatic agents; lubricants; waxes; anti-oxidants; coupling agents such as silanes, particularly Silquest™ A-187 (manufactured by GE Silicones--OSi Specialties, located in Wilton CT); polymers not of the present invention; and waterproofing agents such as silicones and emulsion polymers, particularly hydrophobic emulsion polymers containing, as copolymerized units, greater than 30% by weight, based on the total weight of the emulsion monomer solids used to make the emulsion copolymer, of ethylenically-unsaturated acrylic monomer containing a C5 or greater alkyl group.
in another aspect, the present invention includes methods for treating substrates comprising: Forming a wet, uncured web of fibers, and applying binder thereto. Preferably, the wet, uncured web is placed on a moving screen running through a binder application station where the aqueous binder of the invention is applied to the mat. The binder can be applied to the structure by any suitable means including, for example, air or airless spraying, padding, saturating, roll coating, curtain coating, beater deposition, coagulation or dip and squeeze application, and the resultant saturated wet bound web laying on a supporting wire or screen is run over one or more vacuum boxes to remove enough binder to achieve the desired binder content in the mat. The binder level in the inventive mats can range from 5 to 35 wt. percent of the finished dry mat, preferably 15 to 30 wt. percent and most preferably from 20 to 30 wt. percent, such as 25+/-3 wt. percent. The binder composition is curable by the application of heat, i.e., the binder composition is a thermosetting composition.

### EXAMPLES

The following examples illustrate some of the specific binder compositions and uses of the present invention.

### Example 1: Latex Modifier Emulsion Synthesis Procedure

A round-bottom flask equipped with a paddle stirrer, thermocouple, nitrogen inlet, and reflux condenser was charged with deionized water and inhibitor then heated. Once heated to temperature, sodium laurel ether sulfate surfactant dissolved in deionized water was added to flask, followed by a mixture of sodium hydroxide dissolved in deionized water. A monomer emulsion was prepared according to the recipe in Table 1, Sample L1 consisting of butyl acrylate, styrene, acrylic acid, and sodium lauryl ether sulfate surfactant (30%) in deionized water. A portion of the monomer emulsion was then added to flask, followed by the addition of ammonium persulfate dissolved in deionized water. After achieving peak exotherm, the remaining monomer emulsion was gradually added in addition to a separate solution of ammonium persulfate dissolved in deionized water, while maintaining the same temperature. After this addition was complete, the reaction mixture was held at the same temperature, then cooled. A solution of aqueous 1% EDTA and aqueous 0.15% ferrous sulfate heptahydrate was then added to the reaction mixture. A solution of aqueous initiator (70%) diluted in deionized water and a separate solution dissolved in deionized water was gradually added to reaction mixture over time. The reaction mixture was then cooled and 1.4% methylchloroisothiazolone diluted in deionized water was added to reaction mixture. The resulting latex had a solids content of roughly 48%.

All latex modifier emulsion polymers samples 1-10 were prepared by the same procedure. A round-bottom flask equipped with a paddle stirrer, thermocouple, nitrogen inlet, and reflux condenser was charged with of deionized water and an inhibitor then heated. Monomer emulsions were prepared according to the recipes shown in Table 1, below. As samples 1-10. At temperature, sodium hypophospite monohydrate dissolved in deionized water was added to flask. Then, sodium laurel ether sulfate surfactant dissolved in deionized water was added to flask. A mixture of sodium hydroxide dissolved in deionized water was then added to the flask. A portion of the monomer emulsion recipe was added to the flask as seed for the polymerization.. Then, ammonium persulfate dissolved in deionized water was added. After reaching peak exotherm, the remaining monomer emulsion was fed gradually along with a separate solution of ammonium persulfate dissolved in deionized water, while maintaining temperature. Then, a gradual addition of sodium hydroxide dissolved in deionized water was added. After the reaction temperature was cooled, and a solution of aqueous 1% EDTA and aqueous 0.15% ferrous sulfate heptahydrate was added to the reaction mixture. A solution of aqueous initiator (70%) diluted in deionized water and a separate solution of dissolved in deionized water was gradually added to reaction mixture. The reaction mixture was cooled and 1.4% methylchloroisothiazolone diluted in deionized water was added to reaction mixture. The resulting latexes, shown in Table 2, below, each had a solids content of roughly 46%.

**TABLE 1**

| Monomer Emulsion Recipes for Latex Samples 1-10 (weights in grams) | | | | | | | | | | |
|---|---|---|---|---|---|---|---|---|---|---|
| | L1 | L2 | L3 | L4 | L5 | L6 | L7 | L8 | L9 | L10 |
| Deionized water | 459.7 | 459.7 | 472 | 459.7 | 459.7 | 459.7 | 459.7 | 456.8 | 456.8 | 456.8 |
| Sodium lauryl ether sulfate surfactant, 30% | 89.2 | 89.2 | 84.3 | 89.2 | 89.2 | 89.2 | 89.2 | 88.7 | 88.7 | 88.7 |
| Butyl acrylate | 607.6 | 591.5 | 329.8 | 555.7 | 553.8 | 394.3 | 430.2 | 1072.3 | 1072.3 | 1072.3 |
| Styrene | 826.3 | 914.1 | 1176.1 | 1093.4 | 969.7 | 1129.2 | 1003.7 | 637.7 | 637.7 | 423.9 |
| Acrylic acid | 358.5 | 268.9 | 268.4 | 143.4 | 268.9 | 268.9 | 358.5 | 53.43 | 91.0 | 267.2 |
| Allyl methacrylate | 0 | 17.9 | 18.1 | 0 | 0 | 0 | 0 | 17.81 | 17.81 | 17.81 |

**TABLE 2**

| Compositions of Latex Emulsion Copolymers in Samples L1-L10 | | | |
|---|---|---|---|
| Sample | Composition | pH | Tg (°C) |
| L1 | 33.9 BA / 46.1 Sty / 20.0 AA | 5.1 | 3.0 |
| L2 | 33.0 BA / 51.0 Sty / 15.0 AA / 1.0 ALMA | 5.5 | 53.3 |
| L3 | 18.4 BA / 65.6 Sty / 15.0 AA / 1.0 ALMA | 4.7 | 86.9 |
| L4 | 31.0 BA / 61.0 Sty / 8.0 AA | 5.0 | 53.0 |
| L5 | 30.9 BA / 54.1 Sty / 15.0 AA | 5.0 | 55.5 |
| L6 | 22.0 BA / 63.0 Sty / 15.0 AA | 5.2 | 78.2 |
| L7 | 24.0 BA / 56.0 Sty / 20.0 AA | 4.3 | 82.5 |
| L8 | 60.2 BA / 35.8 Sty / 3 AA / 1 ALMA | 5.4 | 7.0 |
| L9 | 60.2 BA / 33.8 Sty / 5 AA / 1 ALMA | 4.8 | 7.0 |
| L10 | 60.2 BA / 23.8 Sty / 15 AA / 1 ALMA | 5.0 | 0.0 |

### Example 2:Binder Formulations

### 1. Preparation of Stock Binders

A stock binder containing maltodextrin and a polyacid crosslinking agent (crosslinker) was prepared for each series by the following procedure. First, the maltodextrin is added to water in a container and stirred using a benchtop Lightnin Mixer until completely dissolved. The crosslinker (citric acid, maleic acid, or polyacrylic acid) was then added to the vessel while stirring. After the crosslinker is completely dissolved, a cure catalyst (sodium hypophosphite) is optionally added, and the mixture stirred until completely dissolved. The total solids of the stock binder are roughly 50% by weight.

### 2. Formulations of Binder Examples

Stock binder formulations with citric acid as the crosslinker and sodium hypophosphite as the cure catalyst were prepared as shown in Table 3, below

**TABLE 3**

| Stock Binder Formulation | | | | | | | |
|---|---|---|---|---|---|---|---|
| Sample | g. 100% Maltodextrin* | g. 100% Citric Acid | g. 100% Maleic Acid | g. 45% Solution polymer 1¹ | g. 56% Solution polymer 2² | g. 45% NaHP | g. Water |
| SB1 | 1188.0 | 696.0 | - | - | - | 257.8 | 1858.2 |
| SB2 | 1782.0 | 1044.0 | - | - | - | 386.7 | 2787.3 |
| SB3 | 356.4 | - | 208.8 | - | - | 77.3 | 557.5 |
| SB4 | 356.4 | - | - | - | 372.9 | 77.3 | 393.4 |
| SB5 | 534.6 | 313.2 | - | - | - | - | 847.8 |
| SB6 | 534.6 | - | - | 696.0 | - | - | 465.0 |
| SB7 | 891.0 | - | - | 1160.0 | - | 193.33 | 755.7 |
| SB8 | 534.6 | - | 313.2 | - | - | 116.0 | 836.2 |
| SB9 | 475.2 | - | 263.1 | 160.0 | - | 103.1 | 598.6 |

| | | | | | | | |
|---|---|---|---|---|---|---|---|
| *Maltodextrin: from Spectrum Chemical Company, under the name of CAS 9050-36-6, with its Dextrose Equivalents = 20. 1. Solution polymer 1 is a polyacrylic acid solution polymer resin of weight average MW (GPC) of 3,500 . 2. Solution polymer 2 is a polyacrylic acid solution polymer resin of weight average MW (GPC) of 1,800. | | | | | | | |

### 3. Preparation of Cooked Starch

To a one-quart stainless steel vessel, 455 grams of water was weighed and the vessel clamped in a water-bath which has been pre-heated and maintained at 85°C. The level of water in the water bath was maintained higher than the level of water in the vessel. A stirring blade attached to a bench-top stirrer was positioned within the water such that it does not hit the sides or bottom of the vessel. The stirrer was turned on to a speed sufficient to provide a strong, stable vortex. Immediately after placing the vessel in the water-bath, 245 grams of starch (Penford Gum 295 ethoxylated corn starch) was weighed into a paper cup, then added slowly to the stirring water while the water was still close to room temperature. Once the mixture reaches 85°C, timing is begun, and the mixture was cooked for 25 minutes. After the 25 minute cooking time, the mixture was removed from the water bath. Before adding to the binder formulation, the starch mixture was diluted with room temperature water to 10-15% solids, and stirred to constant consistency.

### 4. Binder Compositions

The stock binder and the cooked starch were used to prepare the samples of the binder formulations according to Table 4A and Table 4B, below, by the following procedure. First, the stock binder amount was weighed into a vessel and placed on a bench top Lightnin Mixer. While stirring, the latex modifier emulsion and water were then added to the vessel.

**TABLE 4A**

| Binder Composition Samples | | | | |
|---|---|---|---|---|
| Sample | g. Stock Binder | g. Latex Modifier | g. Water | pH |
| B1 | 600.0 SB1 | 32.6 L4 | 767.4 | - |
| B2 | 600.0 SB1 | 65.2 L4 | 801.4 | - |
| B3 | 600.0 SB1 | 97.8 L4 | 835.5 | - |
| B4 | 600.0 SB1 | 130.43 L4 | 869.6 | - |
| Comp. A1 | 600.0 SB1 | - | 763.6 | - |
| B5 | 600.0 SB2 | 63.8 L3 | 802.8 | 1.7 |
| B6 | 600.0 SB2 | 65.2 L6 | 801.4 | 4.0 |
| B7 | 600.0 SB2 | 65.2 L4 | 801.4 | 4.0 |
| B8 | 600.0 SB2 | 65.2 L5 | 801.4 | 5.0 |
| Comp. A2 | 600.0 SB2 | - | 763.6 | 1.7 |
| Comp. B | 600.0 SB2 | 65.2 Modifier A* | 801.4 | 5.0 |
| Comp. C | 600.0 SB2 | 65.2 Modifier B¹ | 801.4 | 5.0 |
| B9 | 400.0 SB1 | 43.5 L6 | 656.5 | - |
| B10 | 400.0 SB1 | 43.5 L7 | 656.5 | - |
| B12 | 400.0 SB1 | 43.5 L2 | 656.5 | - |
| B13 | 400.0 SB1 | 41.6 L1 | 658.4 | - |
| B14 | 400.0 SB1 | 43.5 L4 | 656.5 | - |
| Comp. A3 | 400.0 SB1 | - | 575.6 | - |
| B15 | 600.0 SB1 | 65.2 L10 | 984.8 | |
| Comp. D | 600.0 SB1 | 65.2 L8 | 984.8 | - |
| Comp. E | 600.0 SB1 | 63.8 L9 | 986.2 | - |
| Comp. F | 600.0 SB1 | 65.2 L4 | 984.8 | - |
| Comp. G | 600.0 SB1 | - | 863.4 | |
| Comp. H | 100.0 SB1 | 10.6 Modifier C² | 110.6 | - |

| | | | | |
|---|---|---|---|---|
| *Modifier A is an all-acrylic self-crosslinking (MOA) latex having no acid monomer produced from a monomer mix of 27.52 EA / 68.57 MMA / 3.9 MOA (n-methylol acrylamide). 1.Modifier B is an all-acrylic self-crosslinking (MOA) latex emulsion having 0.25% methacrylic acid stabilization based on total polymer solids, from The Dow Chemical Company. 5 BA/ 93.15 MMA/ 1.6 MOA/ 0.25 MAA 2. Modifier C is an all-acrylic self-crosslinked (MOA) latex produced from a monomer mix of 50.9 EA / 45 MMA /3.9 MOA | | | | |

Samples B1-B4, B7 and B14 are not according to the invention.

**Table 4B**

| Binder Composition Samples | | | | |
|---|---|---|---|---|
| Sample | g. Stock Binder | g. Latex Modifier | g. Water | pH |
| B16 | 500.0 SB3 | 53.2 L7 | 756.3 | |
| Comp. I | 500.0 SB3 | - | 662.8 | - |
| Comp. J | 357.1 Cooked Starch# | 67.9 L10 | 500.0 | - |
| Comp. K | 285.7 Cooked Starch# | 217.4 L10 | 705.0 | - |
| B17 | 600.0 SB5 | 65.2 L6 | 869.7 | 1.8 |
| B18 | 600.0 SB6 | 65.2 L6 | 869.7 | 2.6 |
| B19 | 600.0 SB7 | 65.2 L6 | 869.7 | 2.6 |
| Comp. L | 600.0 SB5 | - | 795.4 | 1.6 |
| Comp. M | 600.0 SB6 | - | 795.4 | 2.6 |
| Comp. N | 600.0 SB7 | - | 795.4 | 2.5 |
| B20 | 600.0 SB8 | 65.2 L6 | 984.8 | 2.0 |
| B21 | 600.0 SB9 | 65.2 L6 | 984.8 | 2.2 |
| Comp. O | 600.0 SB8 | - | 863.4 | 1.9 |
| Comp. P | 600.0 SB9 | - | 863.4 | 2.1 |

| | | | | |
|---|---|---|---|---|
| ^{#}Cooked Starch is Gum 295 ethoxylated corn starch from Penford Products Company, Cedar Rapids, Iowa. | | | | |

### Example 3: Test Methods

### 1. Handsheet Preparation Procedure Using Fiberglass/Whitewater System 1

Glass fiber non-woven handsheets were prepared with Johns Manville 137 Standard, 3.2 cm (1¼ inch) length, sized glass chop using approximately 7.6 grams of glass fiber per sheet (0.82 kg per 9.3 square meters; 1.8 pounds per 100 square feet). The glass fiber is dispersed in water using SUPERFLOC™ A-1883 RS (Cytec Industries Incorporated, West Paterson, NJ, USA) anionic polyacrylamide water-in-oil emulsion, and RHODAMEEN™ VP-532 SPB (Rhodia Chemical Company, Cranbury, NJ, USA) ethoxylated fatty amine cationic dispersing agent. Handsheets are formed in a Williams (Williams Apparatus Company, Watertown, NY, USA) handsheet mold. The wet sheets are transferred to a vacuum station and de-watered. The aqueous binder compositions described below are prepared and each is applied to a de-watered sheet and the excess is vacuumed off. The sheets are dried/cured in a forced air oven for 3 minutes at 200°C.

This system is used for Binder Composition Samples B5-B21, Comp. A2-A3, and Comp. B-P.

### 2. Handsheet Preparation Procedure Using Fiberglass/Whitewater System 2

Glass fiber nonwoven handsheets were prepared with 1.90 cm (¾ inch) K Fiber wet chop (manufactured by Owens Corning, headquartered in Toledo, Ohio), using approximately 7.6 grams of glass fiber per sheet (1.8 pounds per 100 square feet Or 8.8 kilograms per 100 m²). The glass fiber was dispersed in water using NALCO 7768 polyacrylamide viscosity modifier (Nalco Company, Naperville, IL.), and NALCO 01NM149 Dispersant (Nalco Company, Naperville, 111.). Handsheets were formed in a Williams Standard Pulp Testing Apparatus (Williams Apparatus Company, Watertown, N.Y.), handsheet mold. The wet sheets were transferred to a vacuum station and de-watered. The aqueous binder compositions described below were prepared and each is applied to a de-watered sheet and the excess is vacuumed off. The sheets were dried/cured in a forced air oven for 3 minutes at 200°C.

This system is used for Binder Composition Samples B1-B4, and Comp. A1.

### 3. Mechanical Property Testing of Nonwoven Mat

### i) Elmendorf Tear Strength Testing

Elmendorf tear strength was determined on cut 6.4 cm by 7.6 cm (2.5 inches by 3 inches)samples of dried/cured handsheet. A single ply sample was placed in a Thwing-Albert Tear Tester with a 1600 g tear arm. The sample was notched with a 1.9 cm (0.75 inch) cut and the arm is released. The tear strength was recorded in grams (grams - force).

### ii) Tensile Strength Testing

The glass fiber nonwoven handsheets were cut into 2.54 cm (1 inch) by 12.7 cm (5 inch) strips for tensile testing. Dry and Hot-Wet Tensile Strength (HW TS) testing was performed on seven strips from each sample using a Thwing-Albert Intellect 500 tensile tester (manufactured by Thwing-Albert Instrument Company, headquartered in West Berlin, N.J.) with a 45 N (200 lb.) load cell, 2.54 cm (1 inch)/min. crosshead speed, 20% sensitivity, and a 7.62 cm (3 inch) gap. Dry Tensile testing was performed on the prepared strips. Hot-Wet tensile strength testing was performed after soaking strips for 10 minutes in 85° C water and then testing immediately after removal of the strips, while they were still wet. Hot-Dry Tensile Strength (HD TS) testing was performed on the prepared strips using an Instron 4201 tensile tester (Instron, Norwood, MA) equipped with a 1 kN load cell and an oven chamber encasing the jaws with a temperature range capability 100 to 400° F. (-73° C. to 204° C.). The oven chamber of the tensile tester was pre-heated to 302° F. (150° C.) prior to testing. Once pre-heated, the strips were placed in the jaws and the oven chamber was closed and equilibrated back to 302° F. (150° C.). The samples were then pulled apart at a crosshead speed of 2.54 cm (1 inch)/minute with a 7.62 cm (3 inch) gap. All tensile strengths are recorded in pounds-force (lbs - force). The results of the testing are shown in Table 5, below.

### 4. Test results

As shown in Table 5, below, the tear strength improves as the level of high acid polycarboxy emulsion copolymer modifier increases from 5% to 15% of the total solid weight of the maltodextrin/citric acid binder composition. Tensile strength at room temperature (RT TS) and hot-wet conditions (HW TS) are greatest at 20% latex modifier on total binder weight. The presence of the high acid polycarboxy emulsion copolymer dramatically improved the hot wet tensile strength of the sample strips tested.

**TABLE 5**

| Latex Emulsion Level Effect for Binder Samples 1-4 | | | | |
|---|---|---|---|---|
| Sample | % Latex | Tear | RT TS | HW TS |
| B1 | 5 | 323 | 42.0 | 31.5 |
| B2 | 10 | 351 | 42.0 | 31.3 |
| B3 | 15 | 379 | 45.1 | 34.1 |
| B4 | 20 | 336 | 50.5 | 34.6 |
| Comp. A1 | - | 262 | 42.0 | 23.1 |

As shown in Table 6, below, the high acid polycarboxy emulsion copolymer modifiers internally crosslinked with allyl methacrylate (Samples 5 and 7) provided the greatest improvement in all tensile strength properties measured when added to a maltodextrin/citric acid binder.

**TABLE 6**

| Latex Emulsion Tg Effect for Binder Samples 5-8 | | | | |
|---|---|---|---|---|
| Sample | Tear | RT TS | HD TS | HW TS |
| B5 | 535 | 48.0 | 36.7 | 26.7 |
| B6 | 641 | 41.2 | 34.9 | 20.7 |
| B7 | 561 | 48.1 | 38.8 | 24.6 |
| B8 | 672 | 36.6 | 28.8 | 11.2 |
| Comp. A2 | 234 | 32.1 | 35.2 | 15.6 |
| Comp. B | - | - | - | - |
| Comp. C | - | - | - | - |

Comp. B and C binder samples had severe grit due to instability and could not be applied to handsheets for tensile testing.

As shown in Table 7, below, tensile strength and tear strength properties of high acid polycarboxy emulsion copolymer modifiers increase as the Tg of the latex modifier increases when added to a maltodextrin/citric acid binder. In addition, methacrylic acid can also be used as the polycarboxy acid of the high acid emulsion copolymer modifier to impart improved tear strength.

**TABLE 7**

| Latex Emulsion Acid Monomer Level Effect for Binder Samples 9-14 | | | | |
|---|---|---|---|---|
| Sample | Tear | RT TS | HD TS | HW TS |
| B9 | 383 | 49.0 | 32.4 | 27.4 |
| B10 | 331 | 39.3 | 37.8 | 25.2 |
| B12 | 366 | 46.6 | 37.8 | 22.8 |
| B13 | 337 | 36.0 | 31.0 | 22.7 |
| B14 | 306 | 38.7 | 41.1 | 23.4 |
| Comp. A3 | 287 | 38.4 | 41.2 | 19.2 |

As shown in Table 8, below, soluble maltodextrin based binders containing high acid polycarboxy emulsion copolymer modifiers (Samples 15 and 16) have much higher Hot-Wet tensile strength than similarly modified binders based on high molecular weight, water-insoluble corn starch (Comp. J and Comp. K).

**TABLE 8**

| Comparison of Maltodextrin with High MW Starch | | | | |
|---|---|---|---|---|
| Test Results for Binder Composition Samples 15, 16 | | | | |
| Sample | Tear | RT TS | HD TS | HW TS |
| B15 | 777 | 33.2 | 25.8 | 21.1 |
| B16 | 812 | 28.1 | 26.7 | 14.2 |
| Comp. D | 722 | 29.4 | 29.4 | 21.3 |
| Comp. E | 660 | 33.0 | 26.1 | 19.4 |
| Comp. F | 536 | 33.4 | 24.2 | 15.3 |
| Comp. G | 452 | 30.5 | 29.8 | 16.9 |
| Comp. H* | - | - | - | - |
| Comp. I | 240 | 19.1 | 23.6 | 10.5 |
| Comp. J | 496 | 41.2 | 28.1 | 3.9 |
| Comp. K | 476 | 34.1 | 24.0 | 10.4 |

| | | | | |
|---|---|---|---|---|
| *The Modifier C binder sample (Comp. H) had severe grit due to instability so mat could not be made for tensile testing. | | | | |

Dilution Binder Stability: Binder stabilities were verified using standard dilution studies common to the nonwovens industry. Dilution stability reflects standard wet-laid glass mat manufacturing processes, andwas tested by dilutions of neat binder composition with water to binder ratios of 10:1, 5:1 and 2:1. Approximately 15 grams of neat binder was weighed into a clear 20 ml vial, and de-ionized water was added to achieve the target dilution. The dilutions were homogenized and allowed to sit at room temperature. After 3 hours, the dilutions were visually inspected for homogeneity, sedimentation, and redispersibility. The appearance of total separation of the binder, or formation of a non-dispersible sediment within or at the end of 3 hours is deemed dilution failure. The results of the timed observations are given in Table 9, below. High acid polycarboxy latex modifiers provide dilution stability to maltodextrin/citric acid based binders relative to low or non-acid containing latex modifiers.

**TABLE 9**

| Binder Stabilities at 1:2, 1:5 and 1:10 Dilution in Water | | | | | | |
|---|---|---|---|---|---|---|
| 1:2 Dilution Results | | | | | | |
| | 0 Hours | | | 3 Hours | | |
| | Homogeneity | Sedimentation | Redispersibility | Homogeneity | Sedimentation | Redispersibility |
| Comp. C | H | F | DND | S | F | D |
| Comp. K | S | S | D | TS | S | D |
| Comp. L | H | NS | D | TS | S | D |
| Comp. D | S | NS | D | S | H | DND |
| Comp. E | H | NS | D | H | F | DND |
| Comp. F | H | NS | D | H | NS | DND |
| B6 | H | NS | D | H | NS | D |
| B10 | H | NS | D | H | NS | D |

| 1:5 Dilution Results | | | | | | |
|---|---|---|---|---|---|---|
| | 0 Hours | | | 3 Hours | | |
| | Homogeneity | Sedimentation | Redispersibility | Homogeneity | Sedimentation | Redispersibility |
| Comp. C | H | F | DND | S | S | DND |
| Comp. K | S | S | D | TS | S | D |
| Comp. L | H | NS | D | H | F | DND |
| Comp. D | H | NS | D | S | F | DND |
| Comp. E | H | NS | D | H | F | DND |
| Comp. F | H | NS | D | H | F | DND |
| B6 | H | NS | D | H | F | D |
| B10 | H | NS | D | H | F | D |

| 1:10 Dilution Results | | | | | | |
|---|---|---|---|---|---|---|
| | 0 Hours | | | 3 Hours | | |
| | Homogeneity | Sedimentation | Redispersibility | Homogeneity | Sedimentation | Redispersibility |
| Comp. C | H | F | D | S | S | DNA |
| Comp. K | H | NS | D | S | S | D |
| Comp. L | H | NS | D | H | F | DND |
| Comp. D | H | NS | D | S | F | DND |
| Comp. E | H | NS | D | H | F | DND |
| Comp. F | H | NS | D | H | F | DND |
| B6 | H | NS | D | H | F | D |
| B10 | H | NS | D | H | F | D |

| | | | | | | |
|---|---|---|---|---|---|---|
| Homogeneous samples have a single phase (homogeneous) or separated. H (homogeneous) - in phase, no visible separation or clean supernatant. S (separated) - clear supernatant visible. TS (totally separated) - all latex has fallen out of solution. Sedimentation is accumulation of sediment occurring and to what degree. NS (no sediment or film) - clean bottom. F (film) - accumulation on container side and/or bottom but without free flowing loose sediment or thick accumulation. S (sediment) - record if greater than film is visible. Normally sediment is free flowing but can be chunky and appear as a thick accumulation that may not flow. Redispersibility is detected by inverting container once and tube bottom is observed for persistence of film or sediment. D (disperses) - clean container bottom after inversion. DND (does not disperse) - film or sediment persists after inversion. | | | | | | |

As shown in Table 10, below, improved tear strength and hot/wet tensile strength resulted when adding latex modifier to maltodextrin based binders using either citric acid or polyacrylic acid as the crosslinker, and with or without sodium hypophosphite cure catalyst.

**TABLE 10**

| Cure catalyst effect | | |
|---|---|---|
| Test Results for Binder Composition Samples 17-19 | | |
| Sample | Tear | HW TS |
| B17 | 480 | 17.4 |
| B18 | 439 | 31.9 |
| B19 | 510 | 27.7 |
| Comp. L | 449 | 3.6 |
| Comp. M | 321 | 22.9 |
| Comp. N | 422 | 22.3 |

As shown in Table 11, below, improved tear strength and tensile strengths were observed from adding latex modifier to maltodextrin based binders using either maleic acid or a combination of polyacrylic acid and citric acid as the crosslinker.

**TABLE 11**

| Mixed Polyacid Crosslinkers | | | | |
|---|---|---|---|---|
| Test Results for Binder Composition Samples 20, 21 | | | | |
| Sample | Tear | RT TS | HD TS | HW TS |
| B20 | 550 | 36.1 | 23.4 | 12.2 |
| B21 | 620 | 45.2 | 37.0 | 23.6 |
| Comp. O | 322 | 25.1 | 27.4 | 5.7 |
| Comp. P | 409 | 40.7 | 35.3 | 21.5 |

## Claims

1. An aqueous curable composition comprising:
a. at least one water-soluble carbohydrate having a range of dextrose equivalents (DE) of from 4 to 40, being present in a weight percent on total composition binder solids from 50-97%;
b. at least one polycarboxy emulsion copolymer, as a latex modifier, including, as copolymerized units, from 10-30% by weight based on the total weight of the emulsion copolymer solids, of a carboxy monomer bearing a carboxylic acid group, anhydride group, or salt therof or hydroxyl group; and
c. at least one polyacid crosslinking agent which are polybasic carboxylic acids or aqueous solution addition polymers, each of which contains at least two carboxylic acid groups, anhydride groups, or salts thereof;
wherein the water-soluble carbohydrates are chosen from dextrins, maltodextrin and their combination.

2. The aqueous curable composition of claim 1 wherein it comprises a cure catalyst.

3. The curable composition of claim 2 wherein the cure catalyst is a phosphorous containing compound.

4. The aqueous curable composition of claim 1 wherein the carboxy acid monomer is acrylic acid.

5. The aqueous curable composition of claim 4 wherein the acrylic acid is from 10-30% by weight of the polycarboxy emulsion copolymer.

6. The aqueous curable composition of claim 1 wherein the polycarboxy emulsion copolymer comprises from 0.1 to 10 weight percent of a multi-ethylenically unsaturated monomer.

7. The aqueous curable composition of claim 6 wherein the multi-ethylenically unsaturated monomer is allyl methacrylate.

8. The aqueous curable composition of claim 1 wherein the polyacid crosslinking agent is selected from polybasic carboxylic acid, anhydride, or the salts thereof; or is a water soluble addition copolymer, containing at least two carboxylic acid groups, anhydride groups, or salts thereof.

9. The aqueous curable composition of claim 8 wherein the polyacid crosslinking agent is selected from citric acid, a homopolymer or copolymer of acrylic acid, or the combination thereof.

10. A coating composition containing the aqueous curable composition of claim 1.

## Patentansprüche

1. Eine wässrige aushärtbare Zusammensetzung, beinhaltend:
a. mindestens ein wasserlösliches, einen Bereich von Dextrose-Äquivalenten (DE) von 4 bis 40 aufweisendes Kohlenhydrat, das in einem Gewichtsprozentanteil der Gesamtzusammensetzung der Bindemittelfeststoffe zu 50-97 % vorliegt;
b. mindestens ein Polycarboxyemulsionscopolymer, als Latex-Modifikator, umfassend, als copolymerisierte Einheiten, zu 10-30 Gew.-%, bezogen auf das Gesamtgewicht der Emulsionscopolymerfeststoffe, ein Carboxymonomer, das eine Carbonsäuregruppe, Anhydridgruppe oder ein Salz davon, oder eine Hydroxylgruppe trägt; und
c. mindestens einen Polysäurevernetzer, der Folgendes ist: mehrbasische Carbonsäuren oder Additionspolymere wässriger Lösung, wobei jeder jeweils mindestens zwei Carbonsäuregruppen, Anhydridgruppen oder Salze davon enthält;
wobei die wasserlöslichen Kohlenhydrate aus Dextrinen, Maltodextrin und deren Kombination ausgewählt sind.

2. Wässrige aushärtbare Zusammensetzung gemäß Anspruch 1, wobei sie einen Aushärtungskatalysator beinhaltet.

3. Aushärtbare Zusammensetzung gemäß Anspruch 2, wobei der Aushärtungskatalysator eine phosphorhaltige Verbindung ist.

4. Wässrige aushärtbare Zusammensetzung gemäß Anspruch 1, wobei das CarboxysäuremonomerAcrylsäure ist.

5. Wässrige aushärtbare Zusammensetzung gemäß Anspruch 4, wobei die Acrylsäure zu 10-30 Gew.-% das Polycarboxyemulsionscopolymer ist.

6. Wässrige aushärtbare Zusammensetzung gemäß Anspruch 1, wobei das Polycarboxyemulsionscopolymer zu 0,1 bis 10 Gewichtsprozent ein multiethylenisch ungesättigtes Monomer beinhaltet.

7. Wässrige aushärtbare Zusammensetzung gemäß Anspruch 6, wobei das multiethylenisch ungesättigte Monomer Allylmethacrylat ist.

8. Wässrige aushärtbare Zusammensetzung gemäß Anspruch 1, wobei der Polysäurevernetzer aus mehrbasiger Carbonsäure, Anhydrid oder Salzen davon ausgewählt ist; oder ein wasserlösliches Additionscopolymer, enhaltend mindestens zwei Carbonsäuregruppen, Anhydridgruppen oder Salze davon, ist.

9. Wässrige aushärtbare Zusammensetzung gemäß Anspruch 8, wobei der Polysäurevernetzer aus Zitronensäure, einem Homopolymer oder Copolymer von Acrylsäure, oder der Kombination davon, ausgewählt ist.

10. Eine Beschichtungszusammensetzung, enthaltend die wässrige aushärtbare Zusammensetzung gemäß Anspruch 1.

## Revendications

1. Une composition durcissable aqueuse comprenant :
a. au moins un carbohydrate soluble dans l'eau ayant une gamme d'équivalents dextrose (ED) allant de 4 à 40, étant présent selon un pourcentage en poids sur des matières solides de liant de composition totale allant de 50 à 97 % ;
b. au moins un copolymère en émulsion polycarboxylique, en tant que modificateur de latex, incluant, en tant qu'unités copolymérisées, de 10 à 30 % en poids rapporté au poids total des matières solides de copolymère en émulsion, d'un monomère carboxy portant un groupe acide carboxylique, un groupe anhydride, ou un sel de ceux-ci ou un groupe hydroxyle ; et
c. au moins un agent de réticulation polyacide qui est des acides carboxyliques polybasiques ou des polymères d'addition en solution aqueuse, chacun de ceux-ci contient au moins deux groupes acide carboxylique, groupes anhydride, ou sels de ceux-ci ;
dans laquelle les carbohydrates solubles dans l'eau sont choisis parmi des dextrines, la maltodextrine et leur combinaison.

2. La composition durcissable aqueuse de la revendication 1 dans laquelle est compris un catalyseur de durcissement.

3. La composition durcissable de la revendication 2 dans laquelle le catalyseur de durcissement est un composé contenant du phosphore.

4. La composition durcissable aqueuse de la revendication 1 dans laquelle le monomère d'acide carboxylique est l'acide acrylique.

5. La composition durcissable aqueuse de la revendication 4 dans laquelle l'acide acrylique représente de 10 à 30 % en poids du copolymère en émulsion polycarboxylique.

6. La composition durcissable aqueuse de la revendication 1 dans laquelle le copolymère en émulsion polycarboxylique comprend de 0,1 à 10 pour cent en poids d'un monomère à insaturation multiéthylénique.

7. La composition durcissable aqueuse de la revendication 6 dans laquelle le monomère à insaturation multiéthylénique est le méthacrylate d'allyle.

8. La composition durcissable aqueuse de la revendication 1 dans laquelle l'agent de réticulation polyacide est sélectionné parmi un acide carboxylique polybasique, un anhydride, ou des sels de ceux-ci ; ou est un copolymère d'addition soluble dans l'eau, contenant au moins deux groupes acide carboxylique, groupes anhydride, ou sels de ceux-ci.

9. La composition durcissable aqueuse de la revendication 8 dans laquelle l'agent de réticulation polyacide est sélectionné parmi l'acide citrique, un homopolymère ou copolymère d'acide acrylique, ou la combinaison de ceux-ci.

10. Une composition de revêtement contenant la composition durcissable aqueuse de la revendication 1.
